# EUROPÄISCHE PATENTSCHRIFT

(11) **EP 2 438 317 B1**
(45) Veröffentlichungstag und Bekanntmachung des Hinweises auf die Patenterteilung: **17.04.2013**
(21) Anmeldenummer: 10720613.8
(22) Anmeldetag: 19.05.2010
(51) Int. Cl.: F16C 17/12, F16D 25/061, F16H 57/021

(54) **LAGERANORDNUNG FÜR EINE WELLE**
BEARING ARRANGEMENT FOR A SHAFT
ENSEMBLE PALIER POUR ARBRE

(30) Priorität: 04.06.2009 DE 102009026706
(43) Veröffentlichungstag der Anmeldung: 11.04.2012
(73) Patentinhaber: ZF Friedrichshafen AG, 88038 Friedrichshafen (DE)
(72) Erfinder: ZIEMER, Peter, 88069 Tettnang (DE)
(86) Internationale Anmeldenummer: PCT/EP2010/056905
(87) Internationale Veröffentlichungsnummer: WO 2010/139555

(56) Entgegenhaltungen:
- WO-A1-2005/008096
- CH-A- 304 821
- DE-A1- 3 928 133

## Beschreibung

Die vorliegende Erfindung betrifft eine Lageranordnung für eine Welle, insbesondere für eine Antriebswelle in einem Getriebegehäuse eines Automatgetriebes gemäß der im Oberbegriff des Patentanspruches 1 näher definierten Art.

Lageranordnungen von Wellen und Antriebswellen in Automatgetrieben sind aus der Fahrzeugtechnik bekannt, siche z.B. die DE 3 928 133. Üblicherweise wird die Antriebswelle getriebeeingangsseitig zum Beispiel bei Einsatz eines Drehmomentwandlers über ein Radiallager in einer Leitradwelle gelagert. An der dem Motor beziehungsweise dem Drehmomentwandler abgewandten Seite ist bei bekannten Lageranordnungen ebenfalls ein Radiallager vorgesehen, mit dem die Antriebswelle in dem Getriebegehäuse gelagert ist. Bei dieser Art der Lagerung wird die Antriebswelle in axialer Richtung durch Anschläge in Form von Absätzen auf der Welle gesichert, wobei die Absätze an zumeist ohne Differenzdrehzahl laufenden axial fixierten Bauelementen anliegen.

Um bei den Automatgetriebe nun ein weitgehend bauraumneutrales Schaltelement, zum Beispiel ein Klauenschaltelement, einzubauen, ist vorgesehen, dass ein Betätigungskolben für das Schaltelement im Inneren der Antriebswelle zentral angeordnet wird. Der Betätigungskolben wird mit Druckmittel beziehungsweise Öl beaufschlagt und kann bei Bedarf gegen die Kraft einer Rückstellfeder axial bewegt werden. An dem Betätigungskolben sind mehrere Mitnahmefinger vorgesehen, welche radial durch Öffnungen in der Antriebswelle hindurch verlaufen und die Schaltklaue des Klauenschaltelements entsprechend betätigen.

Der vorliegenden Erfindung liegt die Aufgabe zu Grunde, eine Lageranordnung der eingangs beschriebenen Gattung vorzuschlagen, bei der eine möglichst einfach aufgebaute und kostengünstige Lagerung der Welle und zudem eine Druckmittelabdichtung für den in der Welle vorgesehenen Betätigungskolben realisiert wird.

Diese Aufgabe wird erfindungsgemäß durch die Merkmale des Patentanspruches 1 gelöst. Weitere vorteilhafte Ausgestaltungen ergeben sich aus den Zeichnungen und den Unteransprüchen.

Demnach wird eine Lageranordnung für eine Welle, zum Beispiel eine Antriebswelle aber auch für andere Wellen, in einem Getriebegehäuse eines Automatgetriebes vorgeschlagen, wobei in der Welle ein Betätigungskolben zentral zum Betätigen eines Schaltelements angeordnet ist. Erfindungsgemäß ist zur Lagerung der Welle zumindest an der dem Motor abgewandten Seite des Getriebegehäuses wenigstens ein selbstdichtendes Lager oder dergleichen vorgesehen. Auf diese Weise kann die vorgeschlagene Lageranordnung zur Lagerung zum Beispiel der Antriebswelle zumindest im Bereich der dem Motor abgewandten Seite über das selbstabdichtende Lager ausgeführt werden, so dass die Lagerung gleichzeitig zur Abdichtung des für die Kolbenbetätigung verwendeten Druckmittels genutzt wird und die zum Betätigungskolben führende Druckölzuführung zum Getriebeinnenraum hin abgedichtet wird. Demzufolge werden in vorteilhafter Weise weitere Bauteile zur Abdichtung eingespart und somit der erforderliche Bauraumbedarf verringert.

Im Rahmen einer vorteilhaften Ausführungsvariante der Erfindung kann vorgesehen sein, dass als selbstabdichtendes Lager ein Gleitlager oder dergleichen verwendet wird. Es sind auch andere Lagerungsmöglichkeiten denkbar. Beispielsweise kann auch ein Wälzlager mit einer Rechteckringabdichtung oder dergleichen eingesetzt werden. Jedoch bietet das Gleitlager bezogen auf den erforderlichen Bauraumbedarf deutliche Vorteile.

Gemäß einer möglichen Ausgestaltung der Erfindung kann vorgesehen sein, dass das Lager, zum Beispiel das Gleitlager, innerhalb einer Bohrung in einem Deckel des Getriebegehäuses oder direkt im Getriebegehäuse eingepresst ist, wobei die Welle, zum Beispiel die Antriebswelle innerhalb des Gleitlager in der Bohrung des Deckels bzw. Getriebegehäuses rotierend gelagert ist. Da bei dieser Ausführung das Lager in der Deckelebene angeordnet ist, ergeben sich in vorteilhafter Weise nur geringe Biegemomente.

Es ist auch möglich, dass im Rahmen einer nächsten Weiterbildung der Erfindung der Nabenbereich des Deckels des Getriebegehäuses mit einem Zapfen ausgebildet ist, der in eine Bohrung der Welle geführt ist, so dass die Antriebswelle rotierend auf dem Zapfen gelagert ist. Somit ist kein Gleitlager erforderlich, wodurch weiter Kosten eingespart werden können. Das selbstabdichtende Lager wird hier durch eine direkte Lagerung der Antriebswelle beziehungsweise der Welle auf der Nabe beziehungsweise auf dem gehäusefesten Zapfen realisiert. Ein weiterer Vorteil besteht darin, dass bei der Antriebswelle üblicherweise Stahl als Werkstoff und bei dem Getriebegehäuse üblicherweise Aluminium als Werkstoff eingesetzt werden, so dass sich bei einer Temperaturerhöhung und dem damit verbundenem dünnflüssig werdendem Druckmittel die Leckage gering ist, weil der Spalt zwischen dem Zapfen und der Welle als Folge des im Vergleich zum Stahl höheren Temperaturausdehnungskoeffizienten des Aluminiums kleiner wird.

Gemäß einer nächsten Ausgestaltung der Erfindung kann vorgesehen sein, dass das Gleitlager, in die Bohrung der Welle eingepresst ist, so dass die Welle mit dem Lager rotierend auf dem gehäusefesten Zapfen gelagert ist. Beispielsweise kann das Getriebegehäuse beziehungsweise der Deckel in Aluminium ausgeführt sein. Daher kann auf den Zapfen eine Hülse oder dergleichen aufgepresst werden, welche einen zum Werkstoff des Gleitlagers günstigen Werkstoff aufweist. Insgesamt ergibt sich bei dieser Art der Lagerung der Vorteil, dass bei gleichen Umgebungsverhältnissen die Welle beziehungsweise die Antriebswelle kürzer gebaut werden kann, weniger Totvolumen vorhanden ist und die Relativgeschwindigkeit wegen des kleineren Durchmessers am Lager geringer ist.

Es ist auch denkbar, dass bei der vorgeschlagenen Lageranordnung das Lager in die Bohrung der Antriebswelle eingepresst ist, so dass die Welle mit dem Lager rotierend auf einem in dem Deckel des Getriebegehäuses eingepressten Bolzen oder dergleichen gelagert ist. Hierbei ergibt sich der Vorteil, dass der Lagerungsbereich der Welle beziehungsweise der Antriebswelle erheblich steifer ausgebildet wird.

Nachfolgend wird die vorliegende Erfindung anhand der Zeichnungen weiter erläutert. Es zeigen:
- Fig. 1: eine schematische, geschnittene Teilansicht einer ersten möglichen Ausführungsvariante einer erfindungsgemäßen Lageranordnung einer Antriebswelle in einem Automatgetriebe;
- Fig. 2: eine schematische, geschnittene Teilansicht einer zweiten Ausführungsvariante der Lageranordnung;
- Fig. 3: eine schematische, geschnittene Teilansicht einer dritten Ausführungsvariante der Lageranordnung; und
- Fig. 4: eine schematische, geschnittene Teilansicht einer vierten Ausführungsvariante der Lageranordnung.

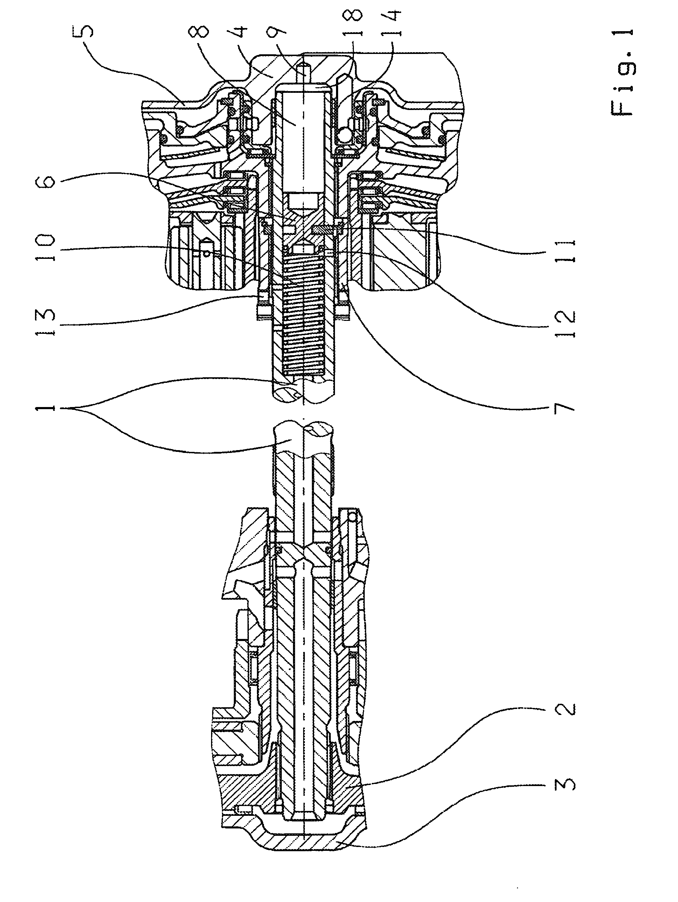

In Figur 1 ist eine erste Ausführungsvariante einer erfindungsgemäßen Lageranordnung für eine Antriebswelle 1 eines exemplarisch nur teilweise dargestellten Automatgetriebes in Planetenbauweise gezeigt, wobei die Bauteile der Planetenstufen nicht weiter bezeichnet sind. Die Antriebswelle 1 ist motorseitig mit einer Wandlernabe 2 eines Drehmomentwandlers 3 gekoppelt, wobei die vorgeschlagene Lageranordnung im Wesentlichen die Lagerung der dem Motor beziehungsweise dem Drehmomentwandler 3 abgewandten Seite betrifft, da die motorseitige Lagerung aufgrund der nicht erforderlichen Abdichtung beliebig gewählt werden kann. Das dem Drehmomentwandler 3 abgewandte Ende der Antriebswelle 1 ist einer Nabe 4 des Getriebegehäuses 5 zugeordnet.

Unabhängig von der jeweiligen Ausführungsvariante weist die Antriebswelle 1 im Inneren einen Betätigungskolben 6 zum Betätigen eines Klauenschaltelements 7 auf. Der Betätigungskolben 6 ist in einer Bohrung 8 der Antriebswelle 1 axial bewegbar angeordnet, wobei der Betätigungskolben 6 über einen Ölversorgungskanal 9 mit Öl als Druckmittel beaufschlagbar ist. Dadurch kann der Betätigungskolben 6 gegen die Kraft einer Rückstellfeder 10 in der Zeichnungsebene nach links bewegt werden. Der Betätigungskolben 6 weist mehrere Mitnahmefinger 11 auf, die in radialer Richtung durch ein Langloch 12 in der Antriebswelle 1 geführt sind, um die Schaltklaue 13 des Klauenschaltelements 7 zu betätigen.

Um eine Druckölabdichtung für die Druckmittelversorgung des Betätigungskolbens 6 zu realisieren, ist erfindungsgemäß vorgesehen, dass zur Lagerung der Antriebswelle 1 an der dem Drehmomentwandler 3 abgewandten Seite zumindest ein selbstdichtendes Lager vorgesehen ist. Auf diese Weise wird zum einen die Antriebswelle 1 gelagert und zum anderen verhindert, dass das Öl zur Beaufschlagung des Betätigungskolbens 6 in den nicht mit Druck beaufschlagten Bereich des Getriebegehäuses 5 entweichen kann.

Bei der ersten Ausführungsvariante gemäß Figur 1 ist die Antriebswelle 1 über ein Gleitlager 14 als selbstabdichtendes Lager in dem Getriebegehäuse 5 gelagert. Dazu ist das Gleitlager 14 in eine Bohrung 18 in der Nabe 4 des Getriebegehäuses 5 eingepresst. Die Antriebswelle 1 rotiert innerhalb des Gleitlagers 14. Somit befindet sich das Gleitlager 14 in der Deckelebene, um möglichst geringe Biegemomente zu erzeugen. Bei dieser Ausführungsvariante wird durch das Gleitlager 14 verhindert, dass Öl in den weiteren druckfreien Raum des Getriebegehäuses 5 gelangen kann.

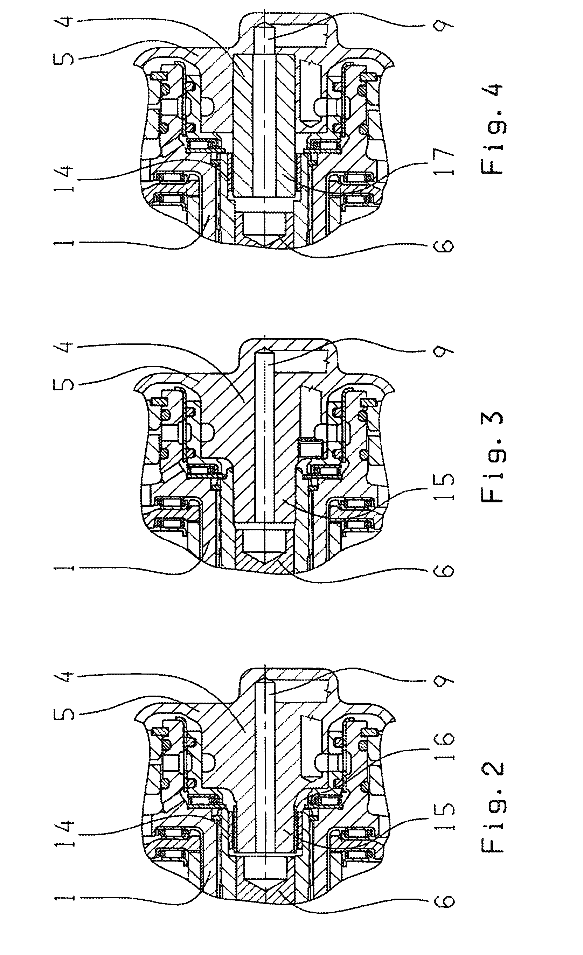

Gemäß Figur 2 ist eine zweite Ausführungsvariante der erfindungsgemäßen Lageranordnung dargestellt. Bei der zweiten Ausführungsvariante ist das Gleitlager 14 in die Bohrung 8 in der Antriebswelle 1 eingepresst. Im weiteren Verlauf der Bohrung 8 ist der Betätigungskolben 6 vorgesehen. Das Gleitlager 14 in der Antriebswelle 1 rotiert auf einem an der Nabe 4 angebrachten beziehungsweise befestigten Zapfen 15. Auf den Zapfen 15 wird eine Hülse beziehungsweise Buchse 16 gepresst, welche aus einem bezogen auf den Werkstoff des Gleitlagers 14 günstigen Werkstoff gefertigt ist. Bei dieser konstruktiven Ausführung der Lagerung der Antriebswelle 1 kann eine besonders kurze Antriebswelle 1 realisiert werden. Auch hier wird über das Gleitlager 14 verhindert, das Öl aus dem Ölversorgungskanal 9 beziehungsweise aus der Bohrung 8 der Antriebswelle 1 in den weiteren druckfreien Raum des Getriebegehäuses 5 austreten kann.

In Figur 3 ist eine dritte Ausführungsvariante der erfindungsgemäßen Lageranordnung gezeigt, bei der im Gegensatz zur zweiten Ausführungsvariante kein Gleitlager 14 und auch keine Hülse 16 vorgesehen ist. Somit wird eine Lagerlauffläche als selbstdichtendes Lager zwischen dem Zapfen 15 und dem Innendurchmesser der Bohrung 8 der Antriebswelle 1 vorgesehen. Da die Antriebswelle 1 vorzugsweise aus Stahl und der Zapfen 15 vorzugsweise aus Aluminium gefertigt sind, ergibt sich bei einer Temperaturerhöhung eine geringere Leckage, da der Spalt zwischen dem Zapfen 15 und der Antriebswelle 1 als Folge des im Vergleich zum Stahl höheren Temperaturausdehnungskoeffizienten des Aluminiums kleiner wird.

Schließlich ist in Figur 4 eine vierte mögliche Ausführungsvariante der vorgeschlagenen Lageranordnung gezeigt, bei der im Vergleich zur zweiten Ausführungsvariante die Hülse 16 durch einen in das Getriebegehäuse 5 beziehungsweise in die Nabe 4 eingepressten Bolzen 17 ersetzt wird. Dadurch kann ein wesentlich steifer ausgebildeter Lagerungsbereich realisiert werden.

### Bezugszeichen

- 1: Antriebswelle
- 2: Wandlernabe
- 3: Drehmomentwandler
- 4: Nabe
- 5: Getriebegehäuse bzw. Deckel vom Getriebegehäuse
- 6: Betätigungskolben
- 7: Klauenschaltelement
- 8: Bohrung in der Antriebswelle
- 9: Ölversorgungskanal
- 10: Rückstellfeder
- 11: Mitnahmefinger
- 12: Langloch
- 13: Schaltklaue
- 14: Gleitlager
- 15: Zapfen
- 16: Hülse
- 17: Bolzen
- 18: Bohrung in der Nabe 4

## Patentansprüche

1. Lageranordnung für eine Welle, insbesondere für eine Antriebswelle (1), in einem Getriebegehäuse (5) eines Automatgetriebes, wobei in der Welle ein Betätigungskolben (6) eines Schaltelements angeordnet ist, **dadurch gekennzeichnet, dass** zur Lagerung der Welle zumindest an der dem Motor abgewandten Seite des Getriebegehäuses (5) wenigstens ein selbstdichtendes Lager vorgesehen ist.

2. Lageranordnung nach Anspruch 1, **dadurch gekennzeichnet, dass** das selbstdichtende Lager als Gleitlager (14) ausgebildet ist.

3. Lageranordnung nach einem der vorangehenden Ansprüche, **dadurch gekennzeichnet, dass** das Gleitlager (14) innerhalb einer Bohrung (18) in einer Nabe (4) des Getriebegehäuses (5) eingepresst ist, wobei die Antriebswelle (1) innerhalb des Gleitlagers (14) in der Bohrung (18) der Nabe (4) rotierend gelagert ist.

4. Lageranordnung nach Anspruch 1 oder 2, **dadurch gekennzeichnet, dass** an einer Nabe (4) des Getriebegehäuses (5) ein Zapfen (15) angebracht ist, der in eine Bohrung (8) der Antriebswelle (1) geführt ist, so dass die Antriebswelle (1) rotierend auf dem Zapfen (15) gelagert ist.

5. Lageranordnung nach Anspruch 4, **dadurch gekennzeichnet, dass** das Gleitlager (14) in die Bohrung (8) der Antriebswelle (1) eingepresst ist, so dass die Antriebswelle (1) mit dem Gleitlager (14) rotierend auf dem Zapfen (15) gelagert ist.

6. Lageranordnung nach Anspruch 4 oder 5, **dadurch gekennzeichnet, dass** auf den Zapfen (15) eine Hülse (16) aufgepresst ist.

7. Lageranordnung nach einem der Ansprüche 4 bis 6, **dadurch gekennzeichnet, dass** der Zapfen (15) aus Aluminium gefertigt ist, und dass die Antriebswelle (1) aus Stahl gefertigt ist.

8. Lageranordnung nach Anspruch 1, 2, 4, 5, 6 oder 7 **dadurch gekennzeichnet, dass** das Gleitlager (14) in die Bohrung (8) der Antriebswelle (1) eingepresst ist, so dass die Antriebswelle (1) mit dem Gleitlager (14) rotierend auf einem in der Nabe (4) des Getriebegehäuses (5) ein gepressten Bolzen (17) gelagert ist.

## Claims

1. Bearing arrangement for a shaft, in particular for a drive shaft (1), in a transmission housing (5) of an automatic transmission, an actuating piston (6) of a shift element being arranged in the shaft, **characterized in that** at least one self-sealing bearing is provided for mounting the shaft at least on one side of the transmission housing (5) which faces away from the engine.

2. Bearing arrangement according to Claim 1, **characterized in that** the self-sealing bearing is designed as a plain bearing (14).

3. Bearing arrangement according to one of the preceding claims, **characterized in that** the plain bearing (14) is pressed in within a bore (18) in a hub (4) of the transmission housing (5), the drive shaft (1) being mounted rotationally in the bore (18) of the hub (4) within the plain bearing (14).

4. Bearing arrangement according to Claim 1 or 2, **characterized in that** a journal (15) is attached to a hub (4) of the transmission housing (5) and is guided in a bore (8) of the drive shaft (1) so that the drive shaft (1) is mounted rotationally on the journal (15).

5. Bearing arrangement according to Claim 4, **characterized in that** the plain bearing (14) is pressed into the bore (8) of the drive shaft (1) so that the drive shaft (1) is mounted rotationally on the journal (15) by means of the plain bearing (14).

6. Bearing arrangement according to Claim 4 or 5, **characterized in that** a sleeve (16) is pressed onto the journal (15).

7. Bearing arrangement according to one of Claims 4 to 6, **characterized in that** the journal (15) is manufactured from aluminium, and **in that** the drive shaft (1) is manufactured from steel.

8. Bearing arrangement according to Claim 1, 2, 4, 5, 6 or 7, **characterized in that** the plain bearing (14) is pressed into the bore (8) of the drive shaft (1) so that the drive shaft (1) is mounted rotationally by use of the plain bearing (14) on a bolt (17) pressed in the hub (4) of the transmission housing (5).

## Revendications

1. Agencement de palier pour un arbre, en particulier pour un arbre d'entraînement (1), dans un boîtier de transmission (5) d'une boîte de vitesses automatique, un piston d'actionnement (6) d'un élément de commutation étant disposé dans l'arbre, **caractérisé en ce que** pour le support sur palier de l'arbre, au moins un palier auto-étanchéifié est prévu au moins sur le côté du boîtier de transmission (5) opposé au moteur.

2. Agencement de palier selon la revendication 1, **caractérisé en ce que** le palier auto-étanchéifié est réalisé sous forme de palier lisse (14).

3. Agencement de palier selon l'une quelconque des revendications précédentes, **caractérisé en ce que** le palier lisse (14) est pressé à l'intérieur d'un alésage (18) dans un moyeu (4) du boîtier de transmission (5), l'arbre d'entraînement (1) étant monté à rotation à l'intérieur du palier lisse (14) dans l'alésage (18) du moyeu (4).

4. Agencement de palier selon la revendication 1 ou 2, **caractérisé en ce qu'**un tourillon (15) est monté sur un moyeu (4) du boîtier de transmission (5), lequel tourillon est guidé dans un alésage (8) de l'arbre d'entraînement (1) de telle sorte que l'arbre d'entraînement (1) soit monté à rotation sur le tourillon (15).

5. Agencement de palier selon la revendication 4, **caractérisé en ce que** le palier lisse (14) est pressé dans l'alésage (8) de l'arbre d'entraînement (1), de telle sorte que l'arbre d'entraînement (1) soit monté avec le palier lisse (14) à rotation sur le tourillon (15).

6. Agencement de palier selon la revendication 4 ou 5, **caractérisé en ce qu'**un manchon (16) est pressé sur le tourillon (15).

7. Agencement de palier selon l'une quelconque des revendications 4 à 6, **caractérisé en ce que** le tourillon (15) est fabriqué en aluminium, et **en ce que** l'arbre d'entraînement (1) est fabriqué en acier.

8. Agencement de palier selon la revendication 1, 2, 4, 5, 6 ou 7, **caractérisé en ce que** le palier lisse (14) est pressé dans l'alésage (8) de l'arbre d'entraînement (1), de telle sorte que l'arbre d'entraînement (1) soit monté avec le palier lisse (14) à rotation sur un boulon (17) pressé dans le moyeu (4) du boîtier de transmission (5).
